# EUROPEAN PATENT APPLICATION

(11) **EP 1 085 350 A1**
(43) Date of publication of application: **21.03.2001**
(21) Application number: 99922598.0
(22) Date of filing: 31.05.1999
(51) Int. Cl.: G02B 1/04, C08F 218/00, C08F 290/06

(54) **RESIN COMPOSITION FOR PLASTIC LENS USE AND PLASTIC LENS**

(30) Priority: 02.06.1998 JP 15298398
(71) Applicant: Showa Denko Kabushiki Kaisha, Tokyo 105-8518 (JP)
(72) Inventor: KAI, Kazufumi, Oita-shi, Oita 870-0111 (JP); ASAI, Yoshifumi, Oita-shi, Oita 870-0111 (JP); UCHIDA, Hiroshi, Oita-shi, Oita 870-0111 (JP)
(74) Representative: Strehl Schübel-Hopf & Partner
(86) International application number: JP9902890
(87) International publication number: WO9963365

(57) **Abstract**

A resin composition for plastic lenses that comprises a polyallyl carbonate and an allyl ester oligomer having a terminal allyl ester group and including an internal cyclohexane and/or cyclohexene skeleton, as well as plastic lenses obtained by molding the resin composition. Plastic lenses are obtained with fewer dyeing specks compared to plastic lenses of the prior art.

## Description

### Technical Field

The present invention relates to a resin composition for a plastic lens which can be used to produce a plastic lens, particularly a plastic lens for spectacles, with reduced generation of uneven dyeing, as well as to a plastic lens obtained by curing the resin composition.

### Background Art

In recent years, organic glass has been used for a large number of optical materials such as cameras, televisions, prisms, telescopes and spectacle lenses. In the field of spectacle lenses in particular, inorganic glass is progressively being replaced with organic glass, especially plastic lenses. In these circumstances, the demands are ever increasing for plastic lenses that are lightweight and easy to mold, have good dyeability and are resistant to the generation of uneven dyeing.

Representative examples of resins conventionally used as starting materials for plastic lenses include polystyrene resin, polycarbonate resin, polymethyl methacrylate resin and polydiethylene glycol bisallyl carbonate resin. The physical properties and production processes for these resins are already known and are described in detail in, for example, Plastic Age, Vol. 35, pp.198-202 (1989).

In this publication, the characteristics of plastic lenses derived from the different resins are described as follows. Plastic lenses derived from polystyrene resin have a high refractive index but have a disadvantage in that satisfactory values cannot be achieved for the birefringence or light scattering. Plastic lenses derived from polycarbonate resin have been shown to have high impact strength but inferior solvent resistance and scratch resistance. Furthermore, plastic lenses derived from polymethyl methacrylate resin have been reported to have a low refractive index and an unsatisfactory level of impact strength.

On the other hand, plastic lenses derived from polydiethylene glycol bisallyl carbonate resin have a refractive index as low as 1.498, but are still the most widely used because of their superior characteristics particularly as plastic lenses for spectacles, including excellent impact strength and a high Abbe number.

Polydiethylene glycol bisallyl carbonate resin has a slower polymerization reaction rate than acrylic resin, and therefore its polymerization reaction is easier to control. This makes it possible to achieve a uniform polymerization reaction, and therefore plastic lenses derived from polydiethylene glycol bisallyl carbonate resin have the advantage of reduced optical strain.

With respect to dyeability, it is known that when dyeing plastic lenses obtained by cast molding according to the ordinary method of dipping in a dyeing solution at a high temperature, plastic lenses derived from polydiethylene glycol bisallyl carbonate resin have a dyeing density superior to that of plastic lenses derived from other resins.

However, no effective means has yet been found for achieving level dyeability, or a reduction in uneven dyeing, which is another property required in terms of dyeability of plastic lenses, and this is one of the problems associated with plastic lenses derived from polydiethylene glycol bisallyl carbonate resin.

### Disclosure of the Invention

It is an object of the present invention to solve the above-mentioned problems of dyeability of plastic lenses derived from polydiethylene glycol bisallyl carbonate resin, by providing a resin composition for plastic lenses which allows production of plastic lenses that are free of uneven dyeing, and by providing a plastic lens, with reduced generation of uneven dyeing, which is obtained by curing the resin.

The present inventors have extensively studied a wide range of resin compositions and their constitutive compositions in order to solve the aforementioned problems. As a result, we have completed the present invention upon the finding that uneven dyeing can be very effectively reduced by a resin composition for plastic lenses that comprises in a specific ratio (a) a polyallyl carbonate having a specific structure and (b) an allyl ester oligomer derived from a dicarboxylic acid and a polyhydric saturated alcohol and having a terminal allyl ester group and an internal cyclohexane and/or cyclohexene skeleton, and by a plastic lens obtained by curing the resin.

More specifically, the present invention provides a resin composition for plastic lenses that comprises (a) 80-98 wt% of a polyallyl carbonate represented by general formula (1):

CH₂=CHCH₂-OCOO(-Y-OCOO)ₘ-CH₂CH=CH₂ (1)

wherein m represents an integer of 1-10 and Y represents an organic residue derived from a polyhydric saturated alcohol having from 2 to 20 carbon atoms and containing from 2 to 6 hydroxyl groups, and (b) 2-20 wt% of an allyl ester oligomer having terminal allyl ester groups and represented by general formula (2):

CH₂=CHCH₂O-(COACOO-Z-O)ₙ-COACOO-CH₂CH=CH₂ (2)

wherein A represents an organic residue derived from a divalent carboxylic acid represented by any one of the following structural formulas 1 to 6, Z represents an organic residue derived from a polyhydric saturated alcohol having from 2 to 20 carbon atoms and containing from 2 to 6 hydroxyl groups, and n represents an integer of 0-100. 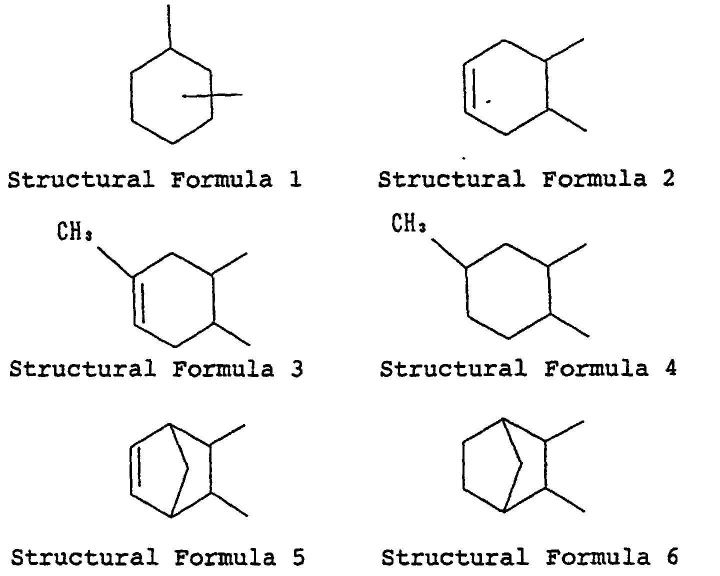 (The positions of the substituents in Structural Formula 1 are 1,2-, 1,3- or 1,4-).

The present invention further provides a plastic lens obtained by curing the aforementioned resin composition of the invention using a radical polymerization initiator.

### Best Mode for Carrying Out the Invention

The present invention will now be explained in greater detail.

The polyallyl carbonate represented by general formula (1) which is used in the resin composition for plastic lenses according to the invention may be synthesized by a publicly known process. Examples thereof include a process whereby a diallyl carbonate and a polyhydric alcohol are reacted by ester exchange reaction in the presence of a catalyst (Japanese Examined Patent Publication No. 3-66327) and a process whereby an allyl alcohol is reacted with phosgene and a polyhydric alcohol while eliminating hydrochloric acid (U.S. Patent Nos. 2,370,565 and 2,592,058), but these are not restrictive.

As the "polyhydric saturated alcohol having from 2 to 20 carbon atoms and containing from 2 to 6 hydroxyl groups" in general formula (1) there may be mentioned divalent saturated alcohols, specific examples of which include ethylene glycol, propylene glycol, 1,3-propanediol, 1,4-butanediol, 1,3-butanediol, neopentyl glycol, hexamethylene glycol and 1,4-cyclohexanedimethanol. Specific examples of trihydric or greater polyhydric saturated alcohols include glycerin, trimethylolpropane, trimethylolethane, pentaerythritol, dipentaerythritol and sorbitol. Also included are dihydric saturated alcohols containing an ether group on the main chain, such as diethylene glycol, dipropylene glycol, triethylene glycol and polyethylene glycol. Among these, diethylene glycol, dipropylene glycol, ethylene glycol and propylene glycol are preferred, and diethylene glycol is even more preferred. When diethylene glycol is used as the polyhydric saturated alcohol, the resulting polyallyl carbonate is diethylene glycol bisallyl carbonate, a specific example of which is CR-39 (trade name), etc. produced by PPG Co. The polyhydric saturated alcohol of the present invention is of course not limited to these specific examples.

In general formula (1), m is an integer of 1-10. When a polyallyl carbonate wherein m exceeds 10 is used in the resin composition for plastic lenses, the plastic lens obtained by cubing may have inferior heat resistance, which is undesirable.

The allyl ester oligomer having terminal allyl ester groups represented by general formula (2), used in the resin composition for plastic lenses of the invention, may be synthesized by a publicly known process. For example, a process may be used whereby the oligomer is synthesized by an ester exchange reaction of a diallyl ester of a divalent carboxylic acid having a cyclohexane or cyclohexene skeleton with a polyhydric saturated alcohol in the presence of a catalyst (Japanese Unexamined Patent Publication No. 6-73145), but the invention is not limited thereto.

The term "oligomer" for general formula (2) means a low molecular weight product obtained from a monomer for use in the synthesis of polymers. This is described in detail in Shin-Pan Kobunshi Jiten (Newly Edited Polymer Glossary), 3rd Ed., "Oligomer", Asakura Shoten (August 10, 1991).

Specific examples of the "divalent carboxylic acid represented by any one of structural formulas 1 to 6" in general formula (2) include 1,2-cyclohexanedicarboxylic acid, 1,3-cyclohexanedicarboxylic acid, 1,4-cyclohexanedicarboxylic acid, 4-cyclohexene-1,2-dicarboxylic acid, methyl-4-cyclohexene-1,2-dicarboxylic acid, 4-methyl-cyclohexane-1,2-dicarboxylic acid, bicyclo[2,2,1]hept-5-ene-2,3-dicarboxylic acid and bicyclo[2,2,1]heptane-1,2-dicarboxylic acid.

As the "polyhydric saturated alcohol having from 2 to 20 carbon atoms and containing from 2 to 6 hydroxyl groups" in general formula (2) there may be mentioned dihydric saturated alcohols, specific examples of which include ethylene glycol, propylene glycol, 1,3-propanediol, 1,4-butanediol, 1,3-butanediol, neopentyl glycol, hexamethylene glycol and 1,4-cyclohexanedimethanol. Specific examples of trihydric or greater polyhydric saturated alcohols include glycerin, trimethylolpropane, trimethylolethane, pentaerythritol, dipentaerythritol and sorbitol. Also included are dihydric saturated alcohols containing an ether group on the main chain, such as diethylene glycol, dipropylene glycol, triethylene glycol and polyethylene glycol. Among these, ethylene glycol, propylene glycol, neopentyl glycol, 1,4-butanediol and 1,3-butanediol are preferred from the standpoint of weather resistance and heat resistance of the resulting plastic lens, with ethylene glycol and propylene glycol being even more preferred. The polyhydric saturated alcohol of the present invention is of course not limited to these specific examples.

In general formula (2), n is an integer of 0-100. When an allyl ester oligomer wherein n exceeds 100 is used in the resin composition for plastic lenses, the plastic lens obtained by curing may have inferior heat resistance, which is undesirable.

In the allyl ester oligomer having terminal allyl ester groups represented by general formula (2), the diallyl ester of a divalent carboxylic acid having a cyclohexane or cyclohexene in the skeleton as the starting material may remain in the form of a monomer depending on the synthesis conditions. However, there is no problem with using the oligomer as it is for the allyl ester oligomer of the resin composition for plastic lenses.

The amount of the polyallyl carbonate represented by general formula (1) is from 80 to 98 wt%, and preferably from 85 to 95 wt%, based on the entire resin composition. If it is less than 80 wt%, the plastic lens obtained by curing the resin composition may have poorer mechanical properties and optical properties.

On the other hand, the amount of the allyl ester oligomer represented by general formula (2) is from 2 to 20 wt%, and preferably from 5 to 15 wt%, based on the entire resin composition. If it is less than 2 wt%, the effect of reduced uneven dyeing may not be achieved upon dyeing of the plastic lens obtained by curing the resin composition. It is also preferably not in excess of 20 wt%, since the resin composition will tend to have higher viscosity when an allyl ester oligomer with a high molecular weight is used.

The resin composition for plastic lenses according to the invention may contain at least one monomer that is copolymerizable with the polyallyl carbonate represented by general formula (1) and/or with the allyl ester oligomer represented by general formula (2), primarily for the purpose of adjusting the viscosity of the resin composition.

Examples of such monomers include monomers with acryl groups, vinyl groups or allyl groups. Specific examples of monomers with acryl groups include methyl (meth)acrylate and isobornyl (meth)acrylate, specific examples of monomers with vinyl groups include vinyl acetate and vinyl benzoate, and specific examples of monomers with allyl groups include diallyl 1,2-cyclohexanedicarboxylate, diallyl 1,3-cyclohexanedicarboxylate, diallyl 1,4-cyclohexanedicarboxylate, diallyl 4-cyclohexene-1,2-dicarboxylate, diallyl methyl-4-cyclohexene-1,2-dicarboxylate, diallyl 4-methyl-cyclohexane-1,2-dicarboxylate, diallyl bicyclo[2,2,1]hept-5-ene-2,3-dicarboxylate and diallyl bicyclo[2,2,1]heptane-1,2-dicarboxylate. The copolymerizable monomers are of course not limited to these specific examples and so long as the physical properties of the plastic lens obtained by curing are not impaired, diallyl phthalate, diallyl terephthalate, diallyl isophthalate, allyl benzoate or the like may also be used.

In order to maintain the optical properties of the plastic lens, diallyl 1,2-cyclohexanedicarboxylate, diallyl 1,3-cyclohexanedicarboxylate, diallyl 1,4-cyclohexanedicarboxylate, diallyl 4-cyclohexene-1,2-dicarboxylate, diallyl methyl-4-cyclohexene-1,2-dicarboxylate, diallyl bicyclo[2,2,1]hept-5-ene-2,3-dicarboxylate and diallyl bicyclo[2,2,1]heptane-1,2-dicarboxylate are preferred, among which diallyl 1,2-cyclohexanedicarboxylate, diallyl 1,3-cyclohexanedicarboxylate and diallyl 1,4-cyclohexanedicarboxylate are especially preferred.

From the standpoint of workability for the cast molding, the resin composition for plastic lenses preferably has a viscosity at 25°C in the range of 10 to 10,000 mPa·s, and more preferably in the range of 20 to 2,000 mPa·s. The "viscosity" as used herein is determined by a viscosity test method using a rotational viscometer described, for example, in JIS K-7117.

The amount of the monomer added is from 1 to 20 parts by weight, and preferably from 5 to 10 parts by weight, to 100 parts by weight of the resin composition for plastic lenses. If the monomer is added in excess of 20 parts by weight, the physical properties required for the plastic lens obtained by curing the resin, such as optical properties, may be undesirably reduced.

A suitable copolymerizable monomer is selected according to the kind and blending ratio of the polyallyl carbonate and allyl ester oligomer contained in the resin composition for plastic lenses or the physical values such as optical properties required for the plastic lens obtained by curing of the resin composition.

The resin composition for plastic lenses according to the invention may contain a radical polymerization initiator as a curing agent.

There are no particular restrictions on radical polymerization initiators that can be added to the resin composition for plastic lenses of the present invention. Any publicly known radical polymerization initiator may be used so long as the physical values such as optical properties of the plastic lens obtained by curing of the resin composition are not adversely affected. As specific examples of radical polymerization initiators which can be added there may be mentioned diisopropyl peroxydicarbonate, dicyclohexyl peroxydicarbonate, di-n-propyl peroxydicarbonate, di-sec-butyl peroxydicarbonate and t-butyl perbenzoate.

The amount of the radical polymerization initiator to be added is in the range of 0.1 to 10 parts by weight, and preferably in the range of 1 to 5 parts by weight, to 100 parts by weight of the resin composition. If it is less than 0.1 part by weight, the resin composition may be insufficiently cured.

The mold processing method for the resin composition of the invention is not particularly limited, although cast molding is preferred. Specifically, the molding may be performed by a method of adding a radical polymerization initiator to the resin composition, injecting the mixture through a line into a mold fixed with an elastomer gasket or spacer, and curing it by heating in an oven or the like.

The resin composition for plastic lenses according to the invention includes a component having an alicyclic structure and the refractive index of a plastic lens obtained using the composition can easily approach 1.498, which is the refractive index of a plastic lens starting from polydiethylene glycol bisallyl carbonate commonly used for conventional plastic lenses. An advantage is therefore provided in that a conventional apparatus can be used as it is without changing the mold, etc. used for molding.

The curing temperature for the molding is approximately from 30 to 140°C, and preferably from 40 to 120°C. From the standpoint of shrinkage or strain during the curing, the curing temperature is preferably controlled such that the curing gradually proceeds while the temperature is elevated, and in most cases it is suitable for the curing to be accomplished over 3 to 30 hours, and preferably 10 to 25 hours.

The resin composition for plastic lenses according to the invention may contain additives commonly used to improve the performance of plastic lenses, for example coloring agents such as dyes and pigments, ultraviolet absorbers, mold releasing agents and an antioxidants.

Examples of coloring agents include anthraquinone-based, azo-based, carbonium-based, quinoline-based, quinoneimine-based, indigoid-based and phthalocyanine-based organic pigments, organic dyes such as azoic dyes and sulfide dyes, and inorganic pigments such as titanium yellow, yellow iron oxide, zinc yellow, chromium orange, molybdenum red, cobalt violet, cobalt blue, cobalt green, chromium oxide, titanium oxide, zinc sulfide and carbon black.

Examples of mold releasing agents include stearic acid, butyl stearate, zinc stearate, stearic acid amide, fluorine-based compounds and silicone compounds.

Examples of ultraviolet absorbers include triazoles such as 2-(2'-hydroxy-tert-butylphenyl)benzotriazole, benzophenones such as 2,4-dihydroxybenzophenone, salicylates such as 4-tert-butylphenyl salicylate, and hindered amines such as bis-(2,2,6,6-tetramethyl-4-piperidinyl) sebacate.

Examples of antioxidants include phenols such as 2,6-di-tert-butyl-4-methylphenol and tetrakis[methylene-3-(3',5'-di-tert-butyl-4-hydroxyphenyl)propionato]methane, sulfur-containing compounds such as dilauryl-3,3'-thiodipropionate, and phosphorus-containing antioxidants such as tris-nonylphenyl phosphite.

The method of dyeing the plastic lens according to the invention is not particularly limited and any publicly known dyeing method may be used. The conventional dip dyeing method known as an ordinary method is preferably used. The term "dip dyeing method" as used herein means a method of dispersing a dispersion dye in water together with a surfactant to prepare a dyeing solution and dipping a plastic lens in this dyeing solution while heating to effect dyeing.

The method of dyeing the plastic lens according to the invention may be another method, such as a method of sublimating an organic pigment to dye the plastic lens (see Japanese Examined Patent Publication No. 35-1384) or a method of sublimating a sublimating dye for dyeing of the plastic lens (see Japanese Examined Patent Publication Nos. 56-159376 and 1-277814). From the standpoint of procedural simplicity, the dip dyeing method is most preferred.

The present invention will now be further illustrated by way of examples which, however, are in no way intended to restrict the invention. Measurement of the different physical properties in the examples was accomplished according to the following methods.

### 1. Refractive index

The refractive index (n_{D}) was measured using an Abbe refractometer (manufactured by ATAGO KK). The contact solution used was α-bromonaphthalene.

### 2. Pencil hardness

The pencil hardness was measured according to JIS K-5400.

### 3. Dyeing method and evaluation of uneven dyeing

To a 1-liter volume beaker there were added 0.8 g of SUMIKALON BLUE E-FBL (dispersion dye produced by Sumitomo Chemical Co., Ltd.) and 0.5 liter of water, and this was stirred to dissolution. The solution was heated to 80°C in a water bath and cured plastic lens samples were dipped into this dispersion dye solution while mounted on holders so as not to overlap one another, and after further immersion at 80°C for 10 minutes they were taken out. This was followed by thorough washing with water and hot-air drying in an oven at 30°C.

These dyed plastic lens samples were visually examined, and those not uniformly dyed in appearance and found to be uneven dyeing were evaluated as unsatisfactory. A total of 30 unsatisfactory cured samples were counted among them.

### 4. Gas chromatography conditions

The gas chromatography was performed using a GC-7A (manufactured by Shimadzu Seisakusho KK) under the following analysis conditions.
Column: OV-17 (3 mm diameter x 0.5 mm length)
Column temperature: 160°C
Injection temperature: 250°C

### 5. Viscosity measurement

The viscosity of the composition before curing was measured according to the method of JIS K-7117. The viscosity was determined by measurement using a BH type viscometer (manufactured by Tokyo Keiki) and a No. 1 rotor (corresponding to No. SA1 spindle according to JIS K-7117) at a rotational frequency of 20 r.p.m.

### Preparation of allyl ester oligomer (Sample A)

Into a 1-liter volume three-necked flask equipped with a distiller there were charged 500 g of diallyl 1,4-cyclohexanedicarboxylate, 101 g of propylene glycol and 0.5 g of dibutyltin oxide, and the mixture was heated to 180°C in a nitrogen stream while distilling off the allyl alcohol produced. When about 90 g of allyl alcohol was distilled off, the pressure within the reaction system was reduced to 10 mmHg (1.33 kPa) to accelerate the distillation rate of allyl alcohol. After a theoretical amount of allyl alcohol was distilled off, heating was continued for one more hour and the system was kept at 190°C, 1 mmHg (0.13 kPa) for one hour, after which the reaction vessel was cooled to obtain 440 g of an allyl ester oligomer (hereinafter referred to as "Sample A").

Sample A was analyzed by gas chromatography and found to contain 11 wt% of diallyl 1,4-cyclohexanedicarboxylate.

### Preparation of allyl ester oligomer (Sample B)

Into a 1-liter volume three-necked flask equipped with a distiller there were charged 530 g of diallyl 1,4-cyclohexanedicarboxylate, 87 g of ethylene glycol and 0.5 g of dibutyltin oxide, and the mixture was heated to 180°C in a nitrogen stream while distilling off the allyl alcohol produced. When about 100 g of allyl alcohol was distilled off, the pressure within the reaction system was reduced to 10 mmHg (1.33 kPa) to accelerate the distillation rate of allyl alcohol. After a theoretical amount of allyl alcohol was distilled off, heating was continued for one more hour and the system was kept at 190°C, 1 mmHg (0.13 kPa) for one hour, after which the reaction vessel was cooled to obtain 445 g of an allyl ester oligomer (hereinafter referred to as "Sample B").

Sample B was analyzed by gas chromatography and found to contain 10 wt% of diallyl 1,4-cyclohexanedicarboxylate.

### Preparation of allyl ester oligomer (Sample C)

Into a 1-liter volume three-necked flask equipped with a distiller there were charged 550 g of diallyl bicyclo[2,2,1]hept-5-ene-2,3-dicarboxylate, 146 g of neopentyl glycol and 0.6 g of dibutyltin oxide, and the mixture was heated to 180°C in a nitrogen stream while distilling off the allyl alcohol produced. When about 110 g of allyl alcohol was distilled off, the pressure within the reaction system was reduced to 10 mmHg (1.33 kPa) to accelerate the distillation rate of allyl alcohol. After a theoretical amount of allyl alcohol was distilled off, heating was continued for one more hour and the system was kept at 190°C, 1 mmHg (0.13 kPa) for one hour, after which the reaction vessel was cooled to obtain 510 g of an allyl ester oligomer (hereinafter referred to as "Sample C").

Sample C was analyzed by gas chromatography and found to contain 15 wt% of diallyl bicyclo[2,2,1]hept-5-ene-2,3-dicarboxylate.

### Example 1

As shown in Table 1, 90 parts by weight of diethylene glycol bisallyl carbonate (trade name: CR-39, produced by PPG), 10 parts by weight of Sample A and 3 parts by weight of diisopropyl peroxydicarbonate (IPP) were blended and mixed by stirring to prepare a completely homogenized resin composition for plastic lenses. A container containing this solution was then placed in a decompressable desiccator and the pressure was reduced with a vacuum pump for about 3 minutes to eliminate gases in the solution. The resulting solution composition was injected into a mold assembled from a glass mold for spectacle plastic lenses and a resinoid gasket by means of an injector while taking full care not to allow mixing of gases, and was then cured in an oven by programmed temperature elevation heating of 40°C for 7 hours, from 40 to 60°C for 10 hours, from 60 to 90°C for 3 hours, 90°C for one hour, from 90 to 120°C for one hour and 120°C for 2 hours.

The viscosity of the resin composition for plastic lenses and the refractive index, pencil hardness and unsatisfactory dyeability of the lens obtained by curing the resin composition are shown in Table 1.

### Examples 2-6

Compositions were prepared according to the blends shown in Table 1 and then cured and subjected to measurement of physical properties in the same manner as in Example 1. The results are shown in Table 1.

### Comparative Example 1

A composition prepared from 100 parts by weight of CR-39 and 3 parts by weight of IPP was cured and subjected to measurement of physical properties in the same manner as in Example 1. The results are shown in Table 1.

**Table 1**

| | | Examples | | | | | | Comparative Example |
|---|---|---|---|---|---|---|---|---|
| | | 1 | 2 | 3 | 4 | 5 | 6 | 1 |
| Blended parts by weight | cR-39 | 90 | 95 | 85 | 90 | 85 | 90 | 100 |
| | Sample A | 10 | 5 | 10 | | | | |
| | Sample B | | | | 10 | 10 | | |
| | Sample C | | | | | | 10 | |
| | 1,2-CHDA^{a)} | | | 5 | | | | |
| | 1,4-CHDA^{b)} | | | | | 5 | | |
| Viscosity (25°C) mPa·s | | 26 | 22 | 20 | 25 | 21 | 28 | 20 |
| Initiator, IPP, parts by weight | | 3 | 3 | 3 | 3 | 3 | 3 | 3 |
| Physical Properties | Refractive index n_{D} | 1.500 | 1.499 | 1.501 | 1.500 | 1.501 | 1.503 | 1.499 |
| | Pencil hardness | 2H | 2H | 2H | 2H | 2H | 2H | 2H |
| | Unsatisfactory dye-ability (number) | 1 | 2 | 1 | 1 | 2 | 2 | 8 |

| | | | | | | | | |
|---|---|---|---|---|---|---|---|---|
| ^{a)} 1,2-CHDA : diallyl 1,2-cyclohexanedicarboxylate | | | | | | | | |
| ^{b)} 1,4-CHDA : diallyl 1,4-cyclohexanedicarboxylate | | | | | | | | |

### Industrial Applicability

The resin composition for plastic lenses according to the present invention allows molding to be accomplished by the conventional cast molding method for plastics, and plastic lenses obtained by curing it have fewer dyeing specks than conventional products, thus making it possible to produce plastic lenses very efficiently.

## Claims

1. A resin composition for plastic lenses that comprises (a) 80-98 wt% of a polyallyl carbonate represented by general formula (1):
CH₂=CHCH₂-OCOO(-Y-OCOO)ₘ-CH₂CH=CH₂ (1)
wherein m represents an integer of 1-10 and Y represents an organic residue derived from a polyhydric saturated alcohol having from 2 to 20 carbon atoms and containing from 2 to 6 hydroxyl groups, and (b) 2-20 wt% of an allyl ester oligomer having terminal allyl ester groups and represented by general formula (2):
CH₂=CHCH₂O-(COACOO-Z-O)ₙ-COACOO-CH₂CH=CH₂ (2)
wherein a represents an organic residue derived from a divalent carboxylic acid represented by any one of the following structural formulas 1 to 6, Z represents an organic residue derived from a polyhydric saturated alcohol having from 2 to 20 carbon atoms and containing from 2 to 6 hydroxyl groups, and n represents an integer of 0-100. 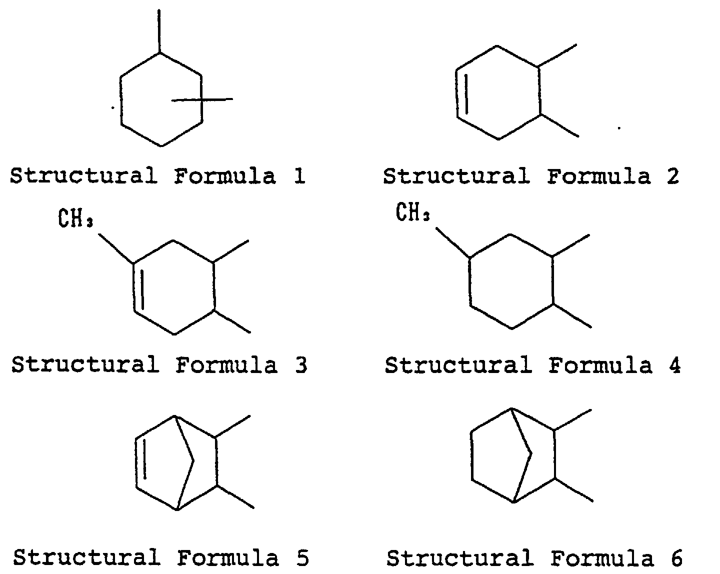 (The positions of the substituents in Structural Formula 1 are 1,2-, 1,3- or 1,4-).

2. A composition according to claim 1, which further contains at least one monomer that is copolymerizable with the polyallyl carbonate represented by general formula (1) and/or with the allyl ester oligomer represented by general formula (2), in an amount of 1 to 20 parts by weight to 100 parts by weight of said resin composition for plastic lenses.

3. A composition according to claim 1 or 2, wherein the polyallyl carbonate represented by general formula (1) is diethylene glycol bisallyl carbonate.

4. A composition according to claim 1 or 2, wherein the divalent carboxylic acid constituting the allyl ester oligomer of general formula (2) is selected from the group consisting of 1,2-cyclohexanedicarboxylic acid, 1,3-cyclohexanedicarboxylic acid and 1,4-cyclohexanedicarboxylic acid, and the polyhydric saturated alcohol constituting the allyl ester oligomer of general formula (2) is selected from the group consisting of ethylene glycol, propylene glycol, neopentyl glycol, 1,3-butanediol and 1,4-butanediol.

5. A composition according to claim 1 or 2, wherein the polyallyl carbonate of general formula (1) is diethylene glycol bisallyl carbonate, the divalent carboxylic acid constituting the allyl ester oligomer of general formula (2) is selected from the group consisting of 1,2-cyclohexanedicarboxylic acid, 1,3-cyclohexanedicarboxylic acid and 1,4-cyclohexanedicarboxylic acid, and the polyhydric saturated alcohol constituting the allyl ester oligomer of general formula (2) is selected from the group consisting of ethylene glycol, propylene glycol, neopentyl glycol, 1,3-butanediol and 1,4-butanediol.

6. A composition according to any one of claims 1 to 5, which further contains from 0.1 to 10 parts by weight of a radical polymerization initiator to 100 parts by weight of said resin composition for plastic lenses.

7. A plastic lens obtained by curing a resin composition for plastic lenses according to claim 6.
